# EUROPEAN PATENT APPLICATION

(11) **EP 4 794 267 A1**
(43) Date of publication of application: **19.08.2026**
(21) Application number: 26152891.3
(22) Date of filing: 20.01.2026
(51) Int. Cl.: H04L 9/40, G06F 21/76

(54) **SMART DATA ROUTING**

(30) Priority: 18.02.2025 GB 202502378
(71) Applicant: Sitehop Ltd, London WC1N 2EB (GB)
(72) Inventor: HARPER, Ben, London, WC1N 2EB (GB)
(74) Representative: Scintilla Intellectual Property Ltd

(57) **Abstract**

In one embodiment of the present invention there is provided a VPN Gateway and a method for determining whether a data packet should be processed by a first or second processor within a VPN gateway, wherein the VPN gateway comprises: a first input, wherein the first input is configured to receive data packets from a public network; a second input, wherein the second input is configured to receive data packets from a private network; a first data packet processor, wherein the first data packet processor is coupled to the first and second inputs; a second data packet processor, wherein the second data packet processor is coupled to the first and second inputs; an analyser, wherein the analyser is coupled to the first and second inputs, a first output, wherein the first output is coupled to the first and second packet processors; a second output, wherein the second output is coupled to the first and second packet processors; wherein the analyser is configured to analyse all the incoming data packets from the first and second inputs and determine, based on a predetermined set of rules, whether the data packets should be processed by the first packet processor or the second packet processor, and transmit the received data packet to the first packet processor or the second packet processor based on that determination; wherein the first and second packet processors are configured to process the transmitted data packets and transmit the processed data packets to the first and second outputs; and wherein the first output is configured to output processed data packets to the public network and the second output is configured to output processed data packets to the private network.

## Description

The present disclosure relates to a VPN apparatus and method which can operate with high data throughput, low latency and low power; in particular, wherein the VPN apparatus and method remains crypto agile by using an FPGA (Field Programable Gate Array) to implement the cryptographic acceleration. Therefore, in the event of advances in quantum technologies, cryptographic algorithms can be updated via an update to the firmware of the FPGA.

### BACKGROUND

A VPN (Virtual Private Network) is a mechanism for connecting private telecommunications networks together in a secure manner over a public telecommunications network. The private networks host VPN gateways, which are connected to both the public and private networks. Traffic from a private network which enters the VPN gateway is encrypted and sent over the public network, to a destination VPN gateway, where it is decrypted.

A VPN prevents data from the private network from being 'visible' whilst it is in transit across the public network. It also prevents malicious data being injected into the private network from the public network.

Typically, VPN implementations are software based. This works well for low bandwidth connections; however, it has several drawbacks when used in high performance networks:
- Software VPN implementations run on general-purpose computing hardware, which is not specifically designed to process VPN traffic. As the amount of data being processed increases, there will be a point at which the processor cannot keep up. At this point the VPN gateway will become a bottleneck in the network, degrading the quality of the network service.
- To mitigate the VPN gateway becoming a bottleneck in the network, it is possible to distribute the processing of network traffic across several processors or computers. In this situation however, the amount of power required scales in proportion to the parallelisation.
- The time it takes for a VPN to accept a packet, process it and send on the resulting packet is known as the latency. Adding a software-based VPN into a high-performance network will considerably increase the latency of the network, which may be unacceptably degrade the network service.

To mitigate the issues associated with the software processing of VPN traffic, it could be possible to use specialised hardware accelerators. These accelerators would be able to perform a cryptographic function in less time than could be processed in software. Whilst this approach increases the performance and decreases the power requirements of a software implementation, it makes the deployment less crypto-agile.

Advances in quantum computing are likely to drastically reduce the amount of computational effort required to break conventional encryption. Once quantum computing becomes a reality, there will be a need to replace many of today's encryption algorithms with quantum resistant ones. At this point having accelerators implemented in hardware will become a huge disadvantage.

Therefore, it would be advantageous to improve one, or all, of these features.

### SUMMARY

In one embodiment of the present invention there is provided a VPN Gateway and method for determining whether a data packet should be processed by a first or second processor within a VPN gateway, wherein the VPN gateway comprises: a first input, wherein the first input is configured to receive data packets from a public network; a second input, wherein the second input is configured to receive data packets from a private network; a first data packet processor, wherein the first data packet processor is coupled to the first and second inputs; a second data packet processor, wherein the second data packet processor is coupled to the first and second inputs; an analyser, wherein the analyser is coupled to the first and second inputs, a first output, wherein the first output is coupled to the first and second packet processors; a second output, wherein the second output is coupled to the first and second packet processors; wherein the analyser is configured to analyse all the incoming data packets from the first and second inputs and determine, based on a predetermined set of rules, whether the data packets should be processed by the first packet processor or the second packet processor, and transmit the received data packet to the first packet processor or the second packet processor based on that determination; wherein the first and second packet processors are configured to process the transmitted data packets and transmit the processed data packets to the first and second outputs; and wherein the first output is configured to output processed data packets to the public network and the second output is configured to output processed data packets to the private network.

Optionally, wherein the first processor is configured for high bandwidth low latency traffic and the second processor is configured for low bandwidth high latency traffic.

Optionally, wherein the second processor further comprises a cryptographic algorithm for encrypting and decrypting the data.

Optionally where in the second processor comprises a cryptographic hardware accelerator.

Optionally, where in the second processor comprises a FPGA.

Optionally, where in the second processor is reconfigurable.

Optionally, where in the first processor is configurable in software.

Optionally, wherein data packets from the private network, not routed to the first processor, are encrypted via an encryption module and combined with packets from the first processor before being forwarded to the public network, and wherein data packets from the public network, not routed to the first processor, are decrypted by the decryption module, before being combined with packets from the first processor and forwarded to the private network.

Optionally wherein the second processor can better perform encryption decryption and authentication of the received data packets than the first processor.

Thus, the aim of the invention is to create a VPN apparatus which can operate with high data throughput, low latency and low power. At the same time the invention remains crypto agile by using an FPGA (Field Programable Gate Array) to implement the cryptographic acceleration. Algorithms can be updated, to stay up to date with the latest standards like Post Quantum Cryptography, through an update to the firmware. The Quantum Threat may mean these standards change in a way that cannot be predicted, cryptographic agility allows for the same processor support these future algorithms.

The invention of the present disclosure integrates software and reconfigurable hardware in such a way that it realises the advantages of software VPNs with hardware acceleration, which can change over time to adapt to changing cryptographic algorithms.

### BRIEF DESCRIPTION OF THE DRAWINGS

The disclosure is described in further detail below by way of example and with reference to the accompanying drawings, in which:
figure1 is a schematic showing a VPN gateway, specifically the interconnection between the FPGA and the software within the gateway, in accordance with a first embodiment of the present disclosure.
figure 2 is a flow diagram showing a method of identifying ICMP packets, in accordance with the first embodiment of the present disclosure;
figure 3 is a flow diagram showing a method of routing WAN packets, in accordance with the first embodiment of the present disclosure; and
figure 4 is a flow diagram showing a method of routing of LAN packets, according to the first embodiment of the present disclosure.

### DETAILED DESCRIPTION

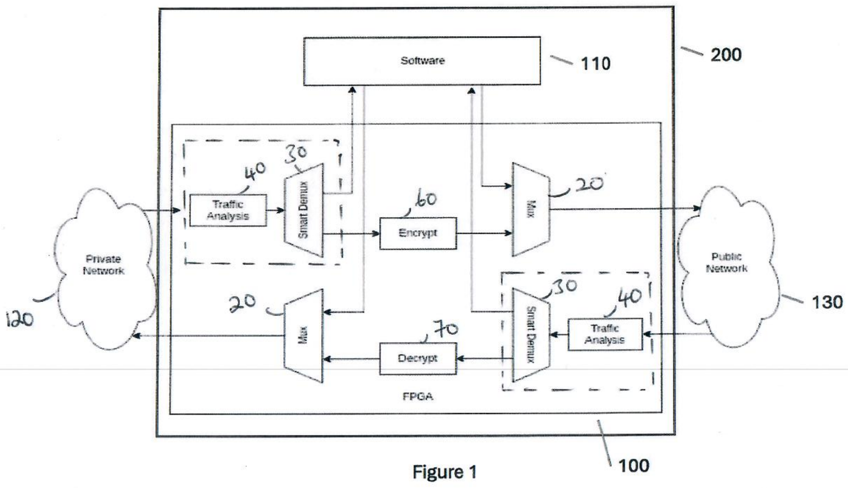

Figure 1 is a schematic showing a VPN gateway 200, specifically the interconnection between an FPGA 100 and the software module 110 within a VPN gateway 200, in accordance with a first embodiment of the present disclosure.

There is shown a VPN Gateway 200, which comprises a Field Programmable Gate Array (FPGA) 100 which is both connected to a Public 130 and Private telecommunications Network 120, such as the Internet. A software module 110 is also shown, the operation of which shall be herein described. The software module 110 runs on general purpose processing hardware, as known in the art.

Data from the public and private network (120, 130) interfaces is analysed within the FPGA 100 and then either routed to the software module 110 or passed to other functions within the FPGA 100 for further processing, as shall be herein described.

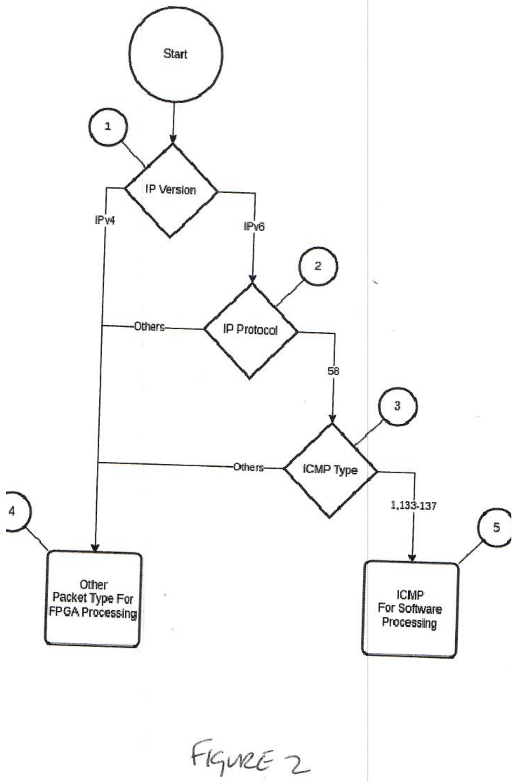

A smart demux 30 is implemented in the FPGA 100 which is then able determine if the packet is best processed in software module 110, or by the FPGA 100. The smart demux 30 analyses all the incoming packets, using a traffic analyzer 40 and makes a decision based on a set of rules (described with reference to figures 2 to 4 following) as to whether the packet should be processed by the software module 110 or the FPGA 100. It routes the packet onto one of two interfaces based on this decision, as shall be described with reference to figures 2 to 4 inclusive.

The software module 110 is best suited to processing the low volume network layer traffic. This includes:
- Setting up and maintaining the VPN connection
- Processing of ICMP (Internet Control Messaging Protocol) packets: wherein the ICMP is a network layer protocol used by network devices to diagnose network communication issues. When two devices connect over the Internet, the ICMP generates errors to share with the sending device in the event that any of the data did not get to its intended destination. For example, if a packet of data is too large for a router, the router will drop the packet and send an ICMP message back to the original source for the data.
- Processing of Neighbour Detect packets: wherein the Neighbour Discovery Protocol (NDP) is a protocol that uses ICMPv6 packets to perform functions similar to the Address Resolution Protocol (ARP) and Internet Control Message Protocol (ICMP) for IPv4.

The software module 110 uses the robust and reliable Linux networking stack to process and respond to networking traffic. The FPGA 100 can more efficiently process the high-volume data which passes over the VPN connection. This involves performing the encryption, decryption and authentication of packets which are passed between the public 130 and private 120 networks.

By being able to route the high-volume VPN data requiring encryption or decryption to the FPGA 100 and all the other data to the software module 110, the VPN gateway 200 can process high volume VPN traffic as well as a diverse range of networking protocols. If all the processing was performed in the software module 110 then the performance of VPN traffic processing would be degraded. If all the processing was performed in the FPGA 100, then only a subset of the networking stack of the Linux kernel could be implemented. The use of both systems results in a robust, reliable and performant system.

As can be seen in Figure 1, data packets from the private network 120, not routed to the software module 110, are encrypted via an encryption module 60 and combined with packets from the software module 110, using a standard mux 20, before being forwarded to the public network 130. Packets from the public network 130, not routed to the software module 110, are decrypted by a decryption module 70, before being combined, using a standard mux 20, with data packets from the software module 110 and forwarded to the private network 120.

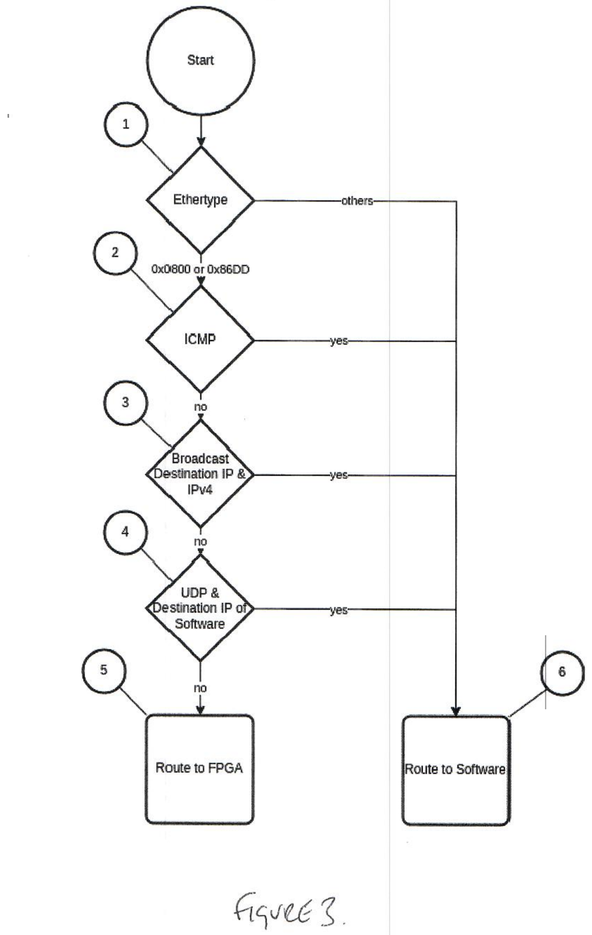

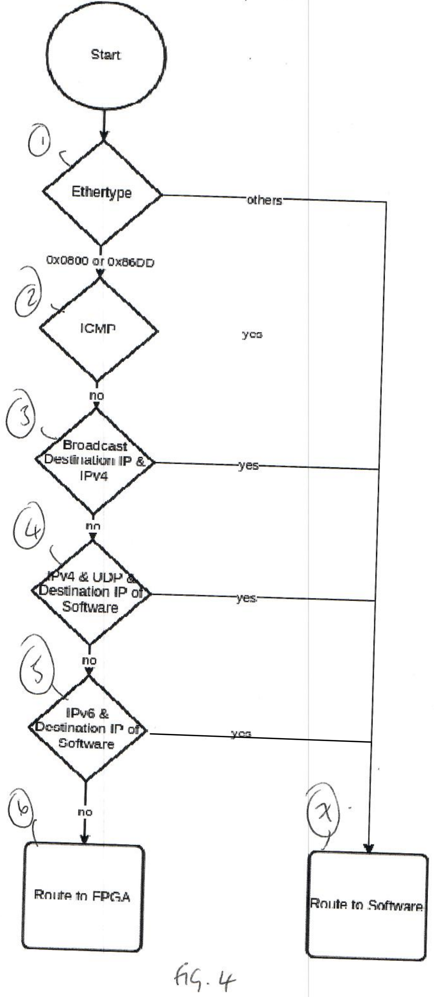

The smart demux 30 decides on where to route the packet based on a series of rules which identify the packets as being best processed by either the software module 110 or the FPGA 100, as shall be herein described in further detail with reference to figures 3 and 4.

With reference to diagrams 3 and 4, it can be seen that in step 1 of each, the FPGA 100 first analyses the packet to determine if it is an ICMP packet. The flow chart showing how this decision is made is shown in Figure 2 following. The packet is then routed to either the software 110 or FPGA 100 using the process as described flow charts in figures 3 and 4, as shall be herein described, depending on whether it is processing traffics coming from a WAN (Wide area Network) or LAN (Local Area Network).

Figure 2 is a flow diagram showing a method of identifying ICMP packets, in accordance with the first embodiment of the present disclosure. The process steps of Figure 2 are described following:

```
 Start
 Step 1 - Decide IP version - is the packet a packet of IP version 4 or IPv6? If IPv6 go to
 step 2. If IPv4, then go to Step 4.
 Step 2 - Determine IP protocol - the IP header of the packet is inspected. The header
 has a field termed the "protocol" field (https://www.rfc-editor.org/rfc/rfc791.html. It
 describes the content contained within the IP packet. Each protocol is given a unique
 number (https://www.iana.org/assignments/protocol-numbers/protocol-
 numbers.xhtml#protocol-numbers-1), wherein for example, 58 denotes the "ICMP-
 IPv6" protocol. So this step routes ICMP-IPv6" protocol to Step 3 and all other packets
 to step 4. If 'Others' go to step 4, if '58' go to step 3.
 Step 3 - ICMP Type - at this step the ICMP header of IPv6 packets is analysed. IPv6 ICMP
 packet headers have a field for "type", and it's this field which is steering the decision at
 this step. Wherein the enumerations differ if it's an ipv4 or ipv6 ICMP packet. Thus
 packets of "Type" 1, 133, 134, 135, 136 and 137 go to Step 5, for all other packet types,
 go to stage 4.
 Step 4- Other packet type for FPGA processing - if the packet is of a type 'other' than
 ICMP, then process the packet using the FPGA crypto accelerator.
 Step 5 - ICMP for Software processing - the packet must be of type ICMP and so it
 should be processed using the software module 110.
 End of process
```

Figure 3 is a flow diagram showing a method of routing WAN (Wide Area Network) packets, in accordance with the first embodiment of the present disclosure. There steps of the process flow are described following:

```
 Start
 Step 1 - Determine the Ethertype, wherein the "Ethertype" is a field in the Ethernet
 header (802.3-2018 - IEEE Standard for Ethernet -
 https://ieeexplore.ieee.org/document/8457469). It describes the protocol the ethernet
 frame is transporting (https://www.iana.org/assignments/ieee-802-numbers/ieee-802-
 numbers.xhtml#ieee-802-numbers-1 ). Wherein in Step 1, the decision is between types
 0x0800, 0x86DD (IPv4 and IPv6) and everything else.
 Step 2 - This step uses the flow chart in Figure 2 to determine whether the packet is an
 ICMP type of not. Yes - route to software (step 6); No - route to step 3.
 Step 3- Broadcast Destination IP & IPV4 - Checking if this is an IPv4 packet with a
 destination address of 255.255.255.255. If yes, then go to step 6 (process in software)
 or if no go to step 4.
 Step 4 - UDP & Destination IP of Software? This step checks if the IP protocol indicates
 the packet contains a UDP packet (https://www.iana.org/assignments/protocol-
 numbers/protocol-numbers.xhtml, type 17) and the destination of the packet is for the
 software (Figure 1, 110). If yes, then go to step 6 (process in software) or if no, go to step
 5 (process in FPGA).
 Step 5 - Process in FPGA (End)
 Step 6 - Process in Software (End)
 End of Process
```

Figure 4 is a flow diagram showing a method of routing of LAN packets, according to the first embodiment of the present disclosure. There is shown a process comprising the following steps:

```
 Start
 Step 1- Determine the Ethertype. If 0x0800 or 0x86DD route to Step 2, if "others" go to
 Step 7 (route to software).
 Step 2 - ICMP. Determine if a ICMP packet using the process of Figure 2. If Yes - route
 to software (Step 7); If No - route to step 3.
 Step 3- Broadcast Destination IP & IPV4. Checking if this is an IPv4 packet with a
 destination address of 255.255.255.255. If Yes - route to software (Step 7); If No - route
 to step 4.
 Step 4 - IPv4 & UDP & Destination IP of Software, A Is this an IPv4 packet, carrying a
 UDP payload with an IP address of the software. If yes, then go to step 7 (route to
 software), if no, then go to step 5.
 Step 5 - Ipv6 & Destination IP of Software. Is this an IPv6 packet with the IP address of
 the software. If yes, then go to step 7 (route to software, if no then go to step 6 (process
 in FPGA).
 Step 6 - Process in FPGA (End)
 Step 7- Process in Software (End)
 End of process
```

The flow diagrams of Figures 2 to 4 which can be used to identify the packets as being best processed by the software or the firmware could be implemented in several different ways. The approaches shown are by no means unique and are an example only of one approach to route the correct data packet to either the software module 110, or the hardware cryptographic accelerator (FPGA 100).

### Alternate approaches:

FPGA only implementation - an alternate implementation would be to implement the entire apparatus in the FPGA. This would require FPGA to process all the network layer protocols as well as implement the VPN negotiation. Doing all this on the FPGA would be excessively complicated.

Software handoff - instead of the FPGA processing the packets from the network, the initial processing of the packets could be done in software, with suitable task handed off to an FPGA processor. The downsides of this are:
- Large volumes of data need to be transferred between the FPGA and the software
- The software needs to perform the initial processing of the packets from the public and private networks, which is not power efficient.

The skilled person will therefore appreciate that variations of the disclosed arrangements are possible without departing from the disclosure. Accordingly, the above description of the specific embodiments is made by way of example only and not for the purposes of limitation. It will be clear to the skilled person that minor modifications may be made without significant changes to the operation described.

## Claims

1. A VPN gateway, wherein the VPN gateway comprises:
a first input, wherein the first input is configured to receive data packets from a public network;
a second input, wherein the second input is configured to receive data packets from a private network;
a first data packet processor, wherein the first data packet processor is coupled to the first and second inputs;
a second data packet processor, wherein the second data packet processor is coupled to the first and second inputs;
an analyser, wherein the analyser is coupled to the first and second inputs,
a first output, wherein the first output is coupled to the first and second packet processors;
a second output, wherein the second output is coupled to the first and second packet processors;
wherein the analyser is configured to analyse all the incoming data packets from the first and second inputs and determine, based on a predetermined set of rules,
whether the data packets should be processed by the first packet processor or the second packet processor, and transmit the received data packet to the first packet processor or the second packet processor based on that determination;
wherein the first and second packet processors are configured to process the transmitted data packets and transmit the processed data packets to the first and second outputs; and
wherein the first output is configured to output processed data packets to the public network and the second output is configured to output processed data packets to the private network.

2. A VPN Gateway of claim 1, wherein the first processor is configured for high bandwidth low latency traffic and the second processor is configured for low bandwidth high latency traffic.

3. A VPN Gateway of claim 1 or claim 2, wherein the second processor further comprises a cryptographic algorithm for encrypting and decrypting the data.

4. A VPN Gateway of any preceding claim, wherein the second processor comprises a cryptographic hardware accelerator.

5. A VPN Gateway of any preceding claim, wherein the second processor comprises a FPGA; and
wherein the second processor is reconfigurable.

6. A VPN Gateway of any preceding claim, wherein the first processor is configurable in software.

7. A VPN Gateway of any preceding claim, wherein data packets from the private network 120, not routed to the first processor, are encrypted via an encryption module 60 and combined with packets from the first processor before being forwarded to the public network 130, and wherein data packets from the public network 130, not routed to the first processor, are decrypted by the decryption module 70, before being combined with packets from the first processor and forwarded to the private network 120.

8. A VPN Gateway of any preceding claim, wherein the second processor can better perform encryption decryption and authentication of the received data packets than the first processor.

9. A method of determining whether a data packet should be processed by a first or second processor within a VPN gateway, the method comprising:
receiving at a first input, data packets from a public network;
receiving at a second input data packets from a private network;
analysing all the incoming data packets from the public and private networks and determining, based on a predetermined set of rules, whether the data packets should be processed by a first packet processor or a second packet processor, and based on the output of the analysis, transmitting the received data packet to the first packet processor or the second packet processor based on that determination;
wherein a first output is configured to output processed data packets to the public network and a second output is configured to output processed data packets to the private network; configuring the first and second packet processors to process the transmitted data packets and transmit the processed data packets to the first and second outputs; and
outputting the data packets to the public or to the private network accordingly.

10. A method according to claim 9, wherein the first processor is configured for high bandwidth low latency traffic and the second processor is configured for low bandwidth high latency traffic.

11. A method according to claim 9 or 10, wherein the second processor further comprises a cryptographic algorithm for encrypting and decrypting the data; and
wherein the second processor comprises a cryptographic hardware accelerator.

12. A method according to any of claims 9 to 11, wherein the second processor comprises a FPGA; and
wherein the second processor is reconfigurable.

13. A method according to any of claim 9 to 12, wherein the first processor is configurable in software.

14. A method according to claim 9 to 13, wherein data packets from the private network, not routed to the first processor, are encrypted via an encryption module and combined with packets from the first processor before being forwarded to the public network, and wherein data packets from the public network, not routed to the first processor, are decrypted by the decryption module, before being combined with packets from the first processor and forwarded to the private network.

15. A method according to any of claims 9 to 14, wherein the second processor can better perform encryption decryption and authentication of the received data packets than the first processor.
